# EUROPÄISCHE PATENTSCHRIFT

(11) **EP 0 916 833 B1**
(45) Veröffentlichungstag und Bekanntmachung des Hinweises auf die Patenterteilung: **04.12.2002**
(21) Anmeldenummer: 98118434.4
(22) Anmeldetag: 29.09.1998
(51) Int. Cl.: F16H 57/02, F02F 7/00, F16F 15/26

(54) **Antriebsanordnung für eine Ausgleichsvorrichtung II. Ordnung für eine Hubkolben-Brennkraftmaschine**
Drive arrangement for a second order balancing device for an internal combustion engine
Agencement d' entrainement d'un dispositif de balancement de deuxieme ordre pour un moteur à combustion interne

(30) Priorität: 13.11.1997 DE 19750286
(43) Veröffentlichungstag der Anmeldung: 19.05.1999
(73) Patentinhaber: Bayerische Motoren Werke Aktiengesellschaft, 80788 München (DE)
(72) Erfinder: Ratzberger, Reinhard, 4400 Steyr (AT)

(56) Entgegenhaltungen:
- GB-A- 2 220 247
- US-A- 1 720 513
- US-A- 3 502 059
- US-A- 5 540 112

## Beschreibung

Die Erfindung bezieht sich nach dem Oberbegriff des Patentanspruches 1 auf eine Antriebsanordnung für eine Ausgleichsvorrichtung II. Ordnung für eine Hubkolben-Brennkraftmaschine, wobei zwei gegensinnig über ein kämmendes Zahnradpaar drehende Ausgleichswellen in einem mit dem Kurbelgehäuse der Brennkraftmaschine lösbar verbindbaren Lagerrahmen angeordnet sind, und die Antriebsanordnung ferner ein mit der Kurbelwelle drehfest verbundenes Antriebs-Zahnrad umfaßt. Die Merkmale gemäß Oberbegriff von Anspruch 1 als allgemein bekannt gelten.

Um bei einer derartigen Antriebsanordnung mit einer unmittelbar vom kurbelwellenseitigen Antriebs-Zahnrad und einem der Zahnräder des kämmenden Zahnradpaares der Ausgleichswellen angetriebenen Ausgleichsvorrichtung II. Ordnung Getriebegeräusche aufgrund von Toleranzen im Zahnflankenspiel zu vermeiden, wird der Achsabstand und damit das Zahnflankenspiel zwischen kurbelwellenseitigem Antriebs-Zahnrad und dem jeweiligen Zahnrad einer der Ausgleichswellen mittels in unterschiedlichen Dicken vorliegenden Unterlegscheiben eingestellt. Die zutreffende Dicke der jeweiligen Unterlegscheiben wird über einen Satz Meister-Zahnräder und Meister-Einstellscheiben ermittelt. Neben dieser aufwendigen Justierung bergen die Unterlegscheiben verschiedener Dicken die weitere Gefahr der Verwechslung, insbesondere im Reparaturfall.

Aus der US 1 720 513 ist für eine Brennkraftmaschine eine Antriebsanordnung mit parallel beabstandeten Wellen für unterschiedliche Nebenaggregate bekannt, wobei jede der Wellen mit einem Zahnrad über ein Zwischenrad mit einer Kurbelwelle der Brennkraftmaschine in Antriebsverbindung steht. Die fliegend angeordneten Zahnräder sind in einer Justierplatte gelagert, die relativ zum Maschinengehäuse horizontal und vertikal zur Einstellung des Zahnflankenspiels der Zahnräder mit dem Zwischenrad verstellbar ist. Zur Einstellung der Justierplatte für das Zahnflankenspiel dienen konterbare Schraubbolzen.

Der Erfindung liegt die Aufgabe zugrunde, eine gattungsgemäße Antriebsanordnung für eine Ausgleichsvorrichtung II. Ordnung derart weiterzubilden, daß einerseits der Umfang der Einstellvorgänge reduziert ist und daß andererseits die Einstellvorgänge selbst vereinfacht sind.

Diese Aufgabe ist mit dem Patentanspruch 1 dadurch gelöst, daß ein seitlich vom Antriebs-Zahnrad der Kurbelwelle vorgesehenes Zwischenrad im/am Lagerrahmen mit einem Zahnrad des Zahnradpaares der Ausgleichswellen kämmend angeordnet ist, und daß der Lagerrahmen ferner mit einer bei gelösten Befestigungsmitteln betätigbaren, formschlüssig wirksamen Einrichtung (Exzenter, Einstellkeil) zur Einstellung eines Zahnflankenspiels zwischen dem kurbelwellenseitigen Antriebs-Zahnrad und dem Zwischenrad ausgerüstet ist.

Mit der Erfindung ist in vorteilhafter Weise zum einen mit der baulichen Zuordnung des Zwischenrades am Lagerrahmen zu einem der Zahnräder des Zahnradpaares der Ausgleichswellen das Flankenspiel entsprechend dem gewählten Achsabstand entsprechend den vorgegebenen Toleranzen gegeben und zum andern mit der formschlüssig wirksamen Einrichtung beispielsweise als Exzenter ein unter Berücksichtigung des Rundlaufes des verbauten Zwischenrades gemittelter Achsabstand relativ einfach einstellbar.

Eine baulich vorteilhaft einfache Weiterbildung der Einstell-Einrichtung ist in weiteren Unteransprüchen angegeben.

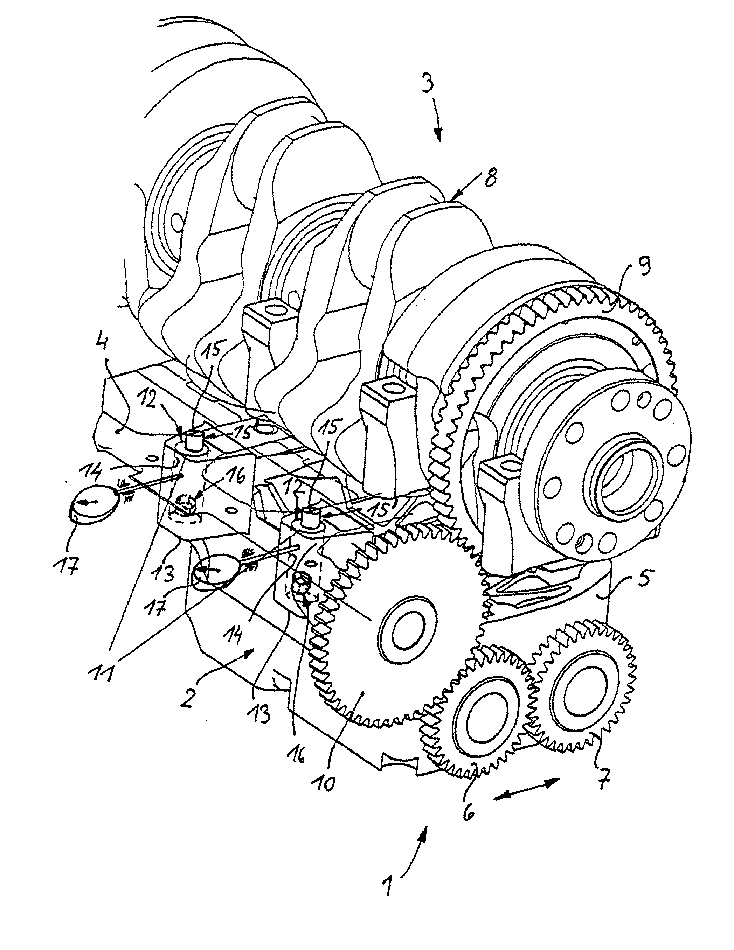

Die Erfindung ist anhand eines in der Zeichnung dargestellten Ausführungsbeispiels beschrieben.

In einer Antriebsanordnung 1 für eine mit 2 bezeichnete Ausgleichsvorrichtung II. Ordnung für eine nicht näher dargestellte Hubkolben-Brennkraftmaschine 3 sind in einem mit dem Kurbelgehäuse 4 der Brennkraftmaschine 3 lösbar verbindbaren Lagerrahmen 5 über ein kämmendes Zahnradpaar 6, 7 gegensinnig drehende Ausgleichswellen angeordnet. Femer umfaßt die Antriebsanordnung 1 ein mit der Kurbelwelle 8 hierfür drehfest verbundenes Antriebs-Zahnrad 9.

Um einerseits den Umfang an Einstellvorgängen zu reduzieren und andererseits den Einstellvorgang selbst in der Handhabung zu vereinfachen, wird gemäß der Erfindung vorgeschlagen, daß ein seitlich vom Antriebs-Zahnrad 9 der Kurbelwelle 8 vorgesehenes Zwischenrad 10 im/am Lagerrahmen 5 mit dem Zahnrad 6 des Zahnradpaares 6, 7 der Ausgleichswellen kämmend angeordnet ist, und daß der Lagerrahmen 5 ferner mit einer bei gelöster Verschraubung betätigbaren, vorzugsweise als Exzenter 11 gestalteten, formschlüssig wirksamen Einrichtung 12 zur Einstellung eines Zahnflankenspiels zwischen dem kurbelwellenseitigen Antriebs-Zahnrad 9 und dem Zwischenrad 10 ausgerüstet ist.

Eine vorteilhaft organisch eingebundene Einstell-Einrichtung 12 ist ferner dadurch erreicht, daß der Lagerrahmen 5 querab zur Kurbelwelle 8 gerichtet angeordnete Fortsätze 13 aufweist und die axial beabstandet angeordneten Fortsätze 13 je eine Bohrung 14 für jeden Exzenter 11 aufweisen, wobei jeder Exzenter 11 über einen außermittig angeordneten Bolzen 15 mit einem in eine korrespondierende, nicht gezeigte Bohrung im Kurbelgehäuse 4 eingreifenden Abschnitt 15' eine bei gelöster Verschraubung des Lagerrahmens 5 wirksame Einstell-Einrichtung 12 bildet. Zur vorteilhaft einfachen Handhabung der Exzenter 11 weist jeder der Exzenter 11 ein Innensechskant 16 auf für eine zur Kurbelwelle 8 achsparallele Einstellverschiebung des das Zwischenrad 10 tragenden Lagerrahmens 5, wobei einer achsparallelen Ausrichtung des Zwischenrades 10 über den Lagerrahmen 5 an diesen gegenseitig beabstandet angreifende Meßeinrichtungen, vorzugsweise Meßuhren 17 dienen.

Mit den zunächst gleichsinnig ausgerichteten Exzentern 11 wird über eine gleichsinnige Drehung dieser Exzenter 11 eine achsparallele Annäherung des Zwischenrades 10 an das Antriebs-Zahnrad 9 bewirkt, bis das Zahnflankenspiel zwischen beiden genannten Zahnrädern 9 und 10 "Null" ist. Anschließendes gleichsinniges Gegendrehen der Exzenter 11 um ein beispielsweise an den Meßuhren 17 abgelesenes Verstellmaß ergibt ein erstes Zahnflankenspiel, das über eine vollständige Umdrehung des Zwischenrades 10 hinsichtlich dessen Rundlaufgenauigkeit geprüft ist. Dieser Vorgang kann mehrfach wiederholt werden um ein bezüglich der Betriebssicherheit der Antriebsanordnung 1 vorteilhaft gemitteltes Zahnflankenspiel zu erzielen.

## Patentansprüche

1. Antriebsanordnung für eine Ausgleichsvorrichtung II. Ordnung für eine Hubkolben-Brennkraftmaschine,
- wobei zwei gegensinnig über ein kämmendes Zahnradpaar (6, 7) drehende Ausgleichswellen in einem mit dem Kurbelgehäuse (4) der Brennkraftmaschine (3) lösbar verbindbaren Lagerrahmen (5) angeordnet sind, und
- die Antriebsanordnung (1) ferner ein mit einer Kurbelwelle (8) drehfest verbundenes Antriebs-Zahnrad (9) umfaßt,
**dadurch gekennzeichnet,**
- **daß** ein seitlich vom Antriebs-Zahnrad (9) der Kurbelwelle (8) vorgesehenes Zwischenrad (10) im/am Lagerrahmen (5) mit einem Zahnrad (6) des Zahnradpaares (6, 7) der Ausgleichswellen kämmend angeordnet ist, und
- **daß** der Lagerrahmen (5) ferner mit einer bei gelösten Befestigungsmitteln betätigbaren, formschlüssig wirksamen Einrichtung (12; 11) zur Einstellung eines Zahnflankenspiels zwischen dem kurbelwellenseitigen Antriebs-Zahnrad (9) und dem Zwischenrad (10) ausgerüstet ist.

2. Antriebsanordnung nach Anspruch 1, **dadurch gekennzeichnet,**
- **daß** der Lagerrahmen (5) querab zur Kurbelwelle (8) gerichtet angeordnete Fortsätze (13) aufweist, und
- die axial beabstandet angeordneten Fortsätze (13) je eine Anlagefläche (14) für einen Exzenter (11) aufweisen, wobei
- jeder Exzenter (11) über einen außermittig angeordneten Bolzen (15) mit einem in eine korrespondierende Bohrung im Kurbelgehäuse (4) eingreifenden Abschnitt (15') eine bei einer gelösten Verschraubung des Lagerrahmens (5) wirksame Einstell-Einrichtung (12) bildet.

3. Antriebsanordnung nach Anspruch 1 und 2, **dadurch gekennzeichnet,**
- **daß** jeder Exzenter (11) Werkzeugangriffsflächen (16) aufweist für eine zur Kurbelwelle (8) achsparallele Einstellverschiebung des das Zwischenrad (10) tragenden Lagerrahmens (5), wobei
- einer achsparallelen Ausrichtung des Zwischenrades (10) über den Lagerrahmen (5) an diesem gegenseitig beabstandet angreifende Meßeinrichtungen (17) dienen.

## Claims

1. A drive arrangement for a second-order differential device for a reciprocating engine,
- wherein two differential shafts rotating in opposite directions via a pair of meshing gearwheels (6, 7) are disposed in a bearing frame (5) releasably connected to the crankcase (4) of the engine (3), and
- the drive arrangement (1) also comprises a drive gearwheel (9) co-rotatably connected to a crankshaft (8),
**characterised in that**
- an intermediate wheel (10) disposed at the side of the wheel (9) driving the crankshaft (8) is mounted in/on the bearing frame (5) and meshes with one gearwheel (6) out of the pair of gearwheels (6, 7) on the differential shafts, and
- the bearing frame (5) is also equipped with a positively operative means (12; 11) actuatable when fastening means are loosened, for setting a tooth flank clearance between the intermediate wheel (10) and the drive wheel (9) on the crankshaft.

2. A drive arrangement according to claim 1, **characterised in that**
- the bearing frame (5) has extensions (13) disposed at an angle to the crankshaft (8), and
- the axial extensions (13), which are axially spaced apart, each have a bearing surface (14) for an eccentric (11), wherein
- each eccentric (11), via an eccentrically mounted pin (15) and a portion (15') engaging in a corresponding bore in the crankcase (4), forms an adjustment means (12) operative when the screws of the bearing frame (5) are loosened.

3. A drive arrangement according to claims 1 and 2, **characterised in that**
- each eccentric (11) has tool engagement surfaces (16) for adjusting the bearing frame (5) holding the intermediate wheel (10) parallel to the axis of the crankshaft (8), wherein
- opposite spaced measuring means (17) engaging the bearing frame (5) are used for aligning the intermediate wheel (10) parallel to the axis.

## Revendications

1. Dispositif d'entraînement pour un dispositif d'équilibrage du deuxième ordre d'un moteur à combustion interne à piston linéaire selon lequel :
- deux arbres d'équilibrage tournant en sens opposé par l'intermédiaire d'une paire de roues dentées (6, 7) en prise sont installés dans un châssis de palier (5) relié de manière amovible au carter de vilebrequin (4) du moteur à combustion interne (3) et
- le dispositif d'entraînement (1) comporte en outre une roue dentée d'entraînement (9) reliée solidairement en rotation au vilebrequin (8),
**caractérisé en ce qu'**
- une roue dentée intermédiaire (10), prévue à côté de la roue dentée d'entraînement (9) du vilebrequin (8), est montée dans ou sur le châssis de palier (5) en engrenant avec une roue dentée (6) de la paire de roues dentées (6, 7) des arbres d'équilibrage et
- le châssis de palier (5) est en outre équipé d'une installation (12) coopérant par une liaison de forme et qui peut être actionnée lorsque les moyens de fixation sont desserrés pour régler le jeu entre les flancs des dents de la roue dentée d'entraînement (9) portée par le vilebrequin et la roue dentée intermédiaire (10).

2. Dispositif d'entraînement selon la revendication 1,
**caractérisé en ce que**
- le châssis de palier (5) comporte des prolongements (13) dirigés transversalement par rapport au vilebrequin (8) et
- les prolongements (13) distants axialement ont chacun une surface d'appui (14) pour un excentrique (11),
- chaque excentrique (11) forme avec un goujon (15) excentré dont un segment (15') pénètre dans un perçage correspondant du carter de vilebrequin (4), une installation de réglage (12) agissant après desserrage du vissage du châssis de palier (5).

3. Dispositif d'entraînement selon l'une quelconque des revendications 1 et 2,
**caractérisé en ce que**
- chaque excentrique (11) comporte des surfaces de prise d'outil (16) pour effectuer une translation de réglage parallèle à l'axe du vilebrequin (8) du châssis de palier (5) portant la roue intermédiaire (10) et
- pour l'alignement d'axe parallèle de la roue intermédiaire (10) par rapport au châssis de palier (5), on utilise des installations de mesure (17) écartées l'une de l'autre et appliquées contre le châssis de palier.
